# DEMANDE DE BREVET EUROPEEN

(11) **EP 4 796 948 A1**
(43) Date de publication de la demande: **26.08.2026**
(21) Numéro de dépôt: 26159850.2
(22) Date de dépôt: 20.02.2026
(51) Int. Cl.: G01S 5/02, G01S 5/14, G01S 11/06, G08G 1/16, G01S 5/00, G01S 5/12

(54) **PROCÉDÉ DE DÉTECTION ET DE LOCALISATION DE PIÉTONS**

(30) Priorité: 21.02.2025 FR 2501805
(71) Demandeur: Ampere SAS, 92100 Boulogne-Billancourt (FR)
(72) Inventeur: BARBIER, Mathieu, 78280 GUYANCOURT (FR); SHAGDAR, Oyunchimeg, 78280 GUYANCOURT (FR)
(74) Mandataire: Renault Group

(57) **Abrégé**

Procédé de détection et de localisation de piétons, comprenant :
- une réception, par un système (20) d'analyse, de signaux radio émis par un ensemble (30) d'équipements,
- une répartition, en sous-groupes (G1, G2, G3), des signaux radio reçus, afin que les signaux radio de chaque sous-groupe (G1, G2, G3) sont émis par un sous-ensemble donné d'équipements (SE1, SE2, SE3) de l'ensemble (30), les équipements de chaque sous-ensemble (SE1, SE2, SE3) étant proches les uns des autres et se déplaçant de manière coordonnée, puis
- pour chaque sous-ensemble donné (SE1, SE2, SE3), et en fonction d'une puissance des signaux radio émis par le sous-ensemble donné, une détermination d'une distance entre un groupe de piétons transportant le sous-ensemble donné (SE1, SE2, SE3) et l'au moins un système (20) d'analyse..

## Description

L'invention concerne un procédé de détection et de localisation de piétons. L'invention porte aussi sur un véhicule automobile comprenant des moyens matériels et logiciels adaptés pour mettre en œuvre un tel procédé de détection et de localisation de piétons. L'invention porte en outre sur un élément d'infrastructure routière comprenant des moyens matériels et logiciels adaptés pour mettre en œuvre un tel procédé de détection et de localisation de piétons.

La détection et la localisation de piétons dans une scène de conduite est un enjeu primordial dans le domaine des systèmes d'aide à la conduite des véhicule automobiles, et également dans le domaine des éléments d'infrastructure routière, tels qu'un feu de circulation.

Les systèmes existants de détection et de localisation de piétons utilisent classiquement des capteurs intégrés à un véhicule ou à un élément d'infrastructure routière, tels que des caméras ou des LIDARs. Toutefois ces solutions présentent des inconvénients. Tout d'abord, elles ne permettent pas de détecter des piétons qui sont masqués par l'environnement, par exemple de la végétation, ou encore du brouillard, ou une faible luminosité. Par ailleurs leur mise en œuvre est couteuse.

Le but de l'invention est de fournir un procédé de détection et de localisation de piétons remédiant aux inconvénients ci-dessus et améliorant les procédés de détection et de localisation de piétons connus de l'art antérieur. En particulier, l'invention porte sur un procédé de détection et de localisation de piétons dont la mise en œuvre est simple, fiable et peu couteuse, et qui permette de détecter des piétons quel que soit l'environnement dans lequel évolue les piétons.

A cet effet, l'invention porte sur un premier procédé de détection et de localisation de piétons situés dans un environnement d'au moins un système d'analyse de signaux radio, notamment un scanner Bluetooth et/ou wifi, l'au moins un système d'analyse équipant un véhicule automobile ou un élément d'infrastructure routière,
le premier procédé comprenant :
- une première étape de réception, par l'au moins un système d'analyse, pendant un intervalle de temps donné, de signaux radio émis par un premier ensemble d'équipements émetteurs de signaux radio transportés par les piétons et situés dans une portée de l'au moins un système d'analyse, puis
- une deuxième étape de répartition, en sous-groupes, des signaux radio reçus par l'au moins un système d'analyse, de sorte que les signaux radio de chaque sous-groupe sont émis par un sous-ensemble donné d'équipements du premier ensemble, les équipements de chaque sous-ensemble donné d'équipements étant situés à proximité les uns des autres et se déplaçant de manière coordonnée, puis
- pour chaque sous-ensemble donné d'équipements du premier ensemble, et en fonction d'une puissance des signaux radio émis par le sous-ensemble donné d'équipements, une troisième étape de détermination d'une distance entre un groupe de piétons transportant le sous-ensemble donné d'équipements et l'au moins un système d'analyse.

Dans un mode de réalisation,
- l'au moins un système d'analyse de signaux radio comprend au moins N systèmes d'analyse de signaux radio, notamment au moins N scanners radio, N étant supérieur ou égal à 1, et/ou
- l'au moins un système d'analyse de signaux radio comprend plusieurs scanners omnidirectionnels, et/ou l'au moins un système d'analyse de signaux radio comprend un ou plusieurs scanners directionnels.

Dans un mode de réalisation, la deuxième étape de répartition des signaux radio reçus en sous-groupes comprend une étape d'analyse en cluster prenant en compte un contenu des signaux radio reçus, notamment une adresse d'un équipement émetteur.

En complément ou alternativement,
- l'étape d'analyse en cluster comprend une application d'une méthode dite des K-moyennes permettant de minimiser, pour chaque cluster, une distance calculée entre des points du cluster et un centre du cluster, et/ou
- l'étape d'analyse en cluster comprend un mise en œuvre d'un algorithme dit de « distorsion temporelle dynamique » permettant d'évaluer une similarité entre deux signaux radio pouvant varier en vitesse ou en durée.

Dans un mode de réalisation, la troisième étape comprend une sous-étape d'amélioration d'une qualité des signaux radio de chaque sous-groupe, afin d'améliorer une précision d'estimation d'une distance entre un groupe de piétons et un système d'analyse de signaux radio, la sous-étape d'amélioration comprenant :
- une mise en œuvre d'une première méthode dite « de sélection de diversité », dans laquelle on sélectionne, parmi plusieurs signaux radio reçus, un signal dont la qualité est la meilleure, et/ou
- une mise en œuvre d'une deuxième méthode dite « de combinaison à égalisation maximale », dans laquelle les signaux radio reçus sont combinés de manière pondérée, chaque signal radio étant pondéré par un coefficient proportionnel à une qualité dudit signal.

Dans un mode de réalisation, une distance, exprimée en mètres, mesurée entre un groupe de piétons et un système d'analyse de signaux radio est égale à un produit d'une distance dite de référence exprimée en mètres, par une puissance donnée du nombre 10, la puissance donnée étant un quotient d'un premier nombre décimal par un deuxième nombre décimal.

De plus, le premier nombre décimal est égal à une différence entre
- une puissance, exprimée en décibels, d'un signal émis par des équipements transportés par le groupe de piétons, et
- une somme des puissances suivantes :
   (i) une puissance d'un signal reçu par le système d'analyse, exprimée en dBm,
   (ii) une puissance perdue par le signal lorsqu'il parcourt la distance de référence,
   (iii) une variation de puissance d'un signal reçu, en fonction d'obstacles situés entre le groupe de piétons et le système d'analyse.

Par ailleurs, le deuxième nombre décimal est égal à un produit par le nombre 10 d'un exposant dit « l'exposant de perte de chemin » qui quantifie une vitesse de diminution de la puissance du signal émis par le groupe de piétons en fonction d'une distance entre le groupe de piétons et le système d'analyse.

L'invention porte en outre sur un premier dispositif de détection et de localisation de piétons situés dans un environnement d'au moins un système d'analyse de signaux radio, le premier dispositif comprenant au moins un système d'analyse de systèmes radios, le premier dispositif comprenant des éléments matériels et/ou logiciels mettant en œuvre le premier procédé selon l'invention.

L'invention porte également sur un deuxième procédé de détection et de localisation de piétons situés dans un environnement de circulation d'un véhicule automobile, le véhicule automobile comprenant un premier dispositif selon l'invention de détection et de localisation de piétons situés dans un environnement d'au moins un système d'analyse de signaux radio.

De plus, le deuxième procédé comprend :
- une étape de détection et de localisation de groupes de piétons par le premier dispositif de détection et de localisation de piétons,
   et, optionnellement,
- une étape de positionnement, dans un repère attaché au véhicule automobile, des groupes piétons détectés par le premier dispositif, et/ou
- une étape d'estimation d'une vitesse de déplacement de chaque groupe de piétons, et/ou
- une étape d'analyse d'un risque de collision du véhicule automobile avec chaque groupe de piétions, et/ou
- une étape d'alerte d'un conducteur ou d'un système de supervision du véhicule automobile d'un risque de collision avec un groupe de piétons.

L'invention porte également sur un deuxième dispositif de détection et de localisation de piétons situés dans un environnement de circulation d'un véhicule automobile, le véhicule automobile étant équipé d'un premier dispositif de détection et de localisation de piétons selon l'invention, le deuxième dispositif comprenant des éléments matériels et/ou logiciels mettant en œuvre le deuxième procédé selon l'invention.

L'invention porte également sur un véhicule automobile comprenant
- un premier dispositif de détection et de localisation de piétons situés dans un environnement d'au moins un système d'analyse de signaux radio selon l'invention, ou
- un deuxième dispositif de détection et de localisation de piétons situés dans un environnement de circulation d'un véhicule automobile selon l'invention.

L'invention porte également sur un troisième procédé de détection et de localisation de piétons situés dans un environnement d'un élément d'infrastructure routière, l'élément d'infrastructure routière comprenant un premier dispositif selon l'invention, le troisième procédé comprenant :
- une étape de détection et de localisation de groupes de piétons, par le premier dispositif de détection et de localisation de piétons,
   et, optionnellement,
- une étape de positionnement, dans un repère attaché dans un repère attaché à l'élément d'infrastructure routière, des groupes piétons détectés par le dispositif, et/ou
- une étape d'estimation d'une vitesse de déplacement de chaque groupe de piétons, et/ou
- une étape de contrôle de l'élément d'infrastructure routière en fonction de données relatives aux groupes de piétons, et/ou
- une étape d'alerte d'un conducteur ou d'un système de supervision d'un véhicule automobile située à proximité de l'élément d'infrastructure routière et dont une trajectoire peut entrer en conflit avec un groupe de piétons.

L'invention porte également sur un troisième dispositif de détection et de localisation de piétons situés dans un environnement d'un élément d'infrastructure routière, le troisième dispositif étant équipé d'un premier dispositif de détection et de localisation de piétons selon l'invention, le dispositif comprenant des éléments matériels et/ou logiciels mettant en œuvre le troisième procédé selon l'invention.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une première représentation schématique d'un dispositif de détection et de localisation de piétons selon un mode de réalisation de l'invention.
La figure 2 est un ordinogramme d'un procédé de détection et de localisation de piétons selon un mode de réalisation de l'invention.
La figure 3 est une représentation alternative d'un procédé de détection et de localisation de piétons selon un mode de réalisation de l'invention.
La figure 4 illustre une étape de regroupement de signaux d'un procédé de détection et de localisation de piétons selon un mode de réalisation de l'invention.
La figure 5 illustre une étape de réception de signaux radio d'un procédé de détection et de localisation de piétons selon un mode de réalisation de l'invention.
La figure 6 illustre une étape de regroupement de signaux radio d'un procédé de détection et de localisation de piétons selon un mode de réalisation de l'invention.
La figure 7 illustre un mode d'exécution alternatif du procédé de détection et de localisation de piéton dans le cas où un sous-ensemble d'émetteurs est détecté par deux scanners distincts.
La figure 8 illustre un premier mode de réalisation d'un véhicule automobile équipé d'un dispositif de détection et de localisation de piétons.
La figure 9 illustre un deuxième mode de réalisation d'un véhicule automobile équipé d'un dispositif de détection et de localisation de piétons.
La figure 10 représente schématiquement une architecture d'un véhicule automobile selon l'invention comprenant un dispositif de détection et de localisation de piétons selon un mode de réalisation de l'invention.
La figure 11 est un ordinogramme d'un procédé de détection et de localisation de piétons dans un environnement d'un véhicule automobile selon l'invention.
La figure 12 illustre un mode de réalisation d'un élément d'infrastructure routière selon l'invention comprenant plusieurs scanners omnidirectionnels.
La figure 13 illustre un mode de réalisation d'un élément d'infrastructure routière selon l'invention comprenant un seul scanner unidirectionnels.
La figure 14 représente schématiquement une architecture d'un élément d'infrastructure routière selon l'invention comprenant un dispositif de détection et de localisation de piétons selon un mode de réalisation de l'invention.
La figure 15 est un ordinogramme d'un procédé de détection et de localisation de piétons dans un environnement d'un élément d'infrastructure routière selon l'invention.
La figure 16 illustre une mise en œuvre d'un procédé de détection et de localisation de piétons dans un environnement d'un élément d'infrastructure routière selon l'invention.

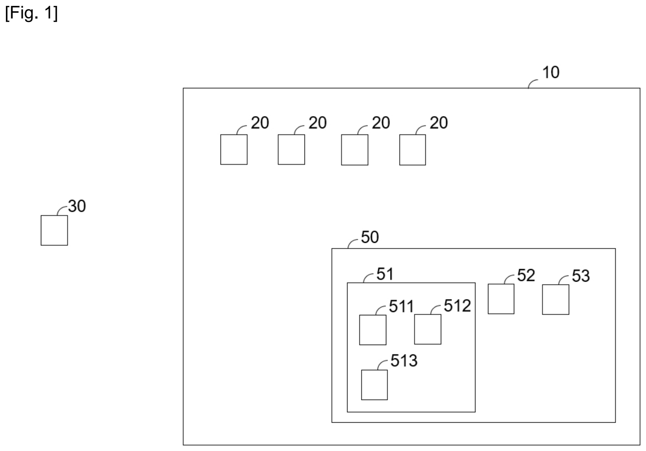

La figure 1 illustre schématiquement un premier dispositif 10 de détection et de localisation de piétons selon un mode de réalisation de l'invention. Le premier dispositif 10 (nommé dispositif 10 dans la suite du document) peut équiper un véhicule automobile 100, qui peut être, par exemple, un véhicule particulier, un véhicule utilitaire, un camion ou un bus. Alternativement, le dispositif 10 peut équiper un élément d'infrastructure routière 200, notamment un feu de circulation 200.

Dans la suite du document, le terme de « piéton » est utilisé pour désigner des usagers dits « vulnérables » d'un espace où circulent des véhicules automobiles. Les usagers vulnérables comprennent des piétons et/ou des cyclistes et/ou des usagers de trottinettes.

Le dispositif 10 de détection et de localisation de piétons comprend au moins N systèmes 20 d'analyse de signaux radio, N étant supérieur ou égal à 1, par exemple, N étant égal à 1 ou 2 ou 3 ou 4.

Dans la suite du document, les systèmes 20 d'analyse de signaux radio sont nommés « scanners 20 » ou « ensemble de scanners 20 ».

En complément ou alternativement, l'ensemble de scanners 20 comprend plusieurs scanners omnidirectionnels, et/ou plusieurs scanners directionnels.

Les scanners 20 sont aptes à recevoir des signaux radios, notamment des signaux Bluetooth ou Wifi, diffusés par des équipements 30 émettant des signaux radios. Les équipements 30 peuvent être notamment des équipements connectés de piétons situés à proximité du dispositif 10 (et donc d'un scanner 20), par exemple des téléphones et/ou des montres connectées. Dans la suite du document, les équipements émetteurs 30 sont nommés « émetteurs 30 ».

Préférentiellement, une pluralité de scanners de l'ensemble 20 sont répartis spatialement, de sorte à pouvoir localiser chaque émetteur 30. Les scanners de l'ensemble 20 sont destinés à analyser des signaux radio (tel que Bluetooth ou Wifi) émis par les émetteurs 30 de sorte à détecter et localiser des piétons porteurs des émetteurs 30.

Le dispositif 10 comprend en outre une unité de calcul 50 permettant de mettre en œuvre le procédé selon l'invention. L'unité de calcul 50 comprend un microprocesseur 51, une mémoire électronique locale 52 et des interfaces de communication 53 permettant au microprocesseur 51 de communiquer avec moins un scanner 20. Dans un mode de réalisation, le microprocesseur permet d'exécuter un logiciel comprenant les modules suivants, qui collaborent entre eux :
- un module 511 de réception, par au moins un scanner de l'ensemble 20, de signaux radio émis par des équipements émetteurs 30,
- un module 512 de regroupement, en sous-groupes, des signaux radio reçus par l'au moins un scanner de l'ensemble 20, et
- un module 513 de détermination d'une position d'au moins un groupe de piétons en fonction de sous-groupes de signaux radio définis.

Le dispositif 10, comprend de préférence tous les éléments matériels et/ou logiciels configurés de sorte à mettre en œuvre le procédé défini dans l'objet de l'invention ou le procédé décrit plus bas.

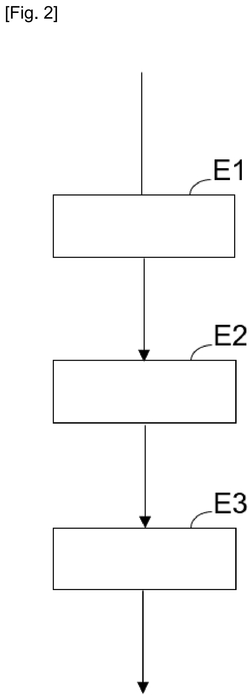

Un premier ordinogramme d'un procédé de détection et de localisation de piétons situés dans un environnement d'au moins un système 20 d'analyse de signaux radio selon l'invention est illustré par la figure 2 : il comprend une itération sur trois étapes E1, E2, E3 qui s'enchainent successivement. Dans la suite du document, le procédé de détection et de localisation de piétons situés dans un environnement d'au moins un système 20 d'analyse de signaux radio peut également être nommé « premier procédé » ou « premier procédé selon l'invention ».

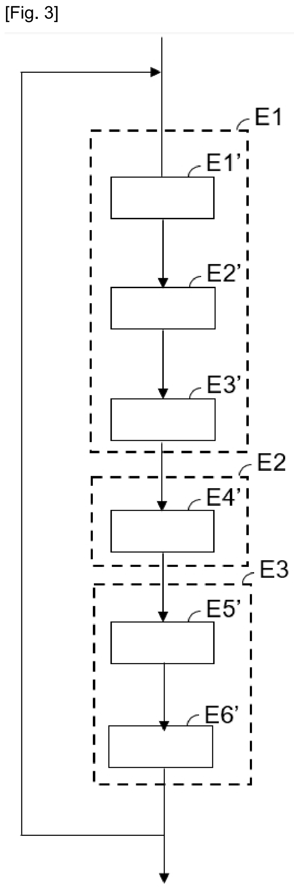

La figure 3 fournit une représentation alternative du premier procédé selon l'invention, dans laquelle un deuxième ordinogramme est décomposé en six étapes E1' à E6' qui s'enchainent successivement,
- les étapes E1', E2' et E3' du deuxième ordinogramme (portant respectivement sur la réception, le nettoyage, puis un filtrage des données) correspondant à la première étape E1 du premier ordinogramme,
- l'étape E4' du deuxième ordinogramme correspondant à la deuxième étape de clustering E2, et
- les étapes E5' et E6' du deuxième ordinogramme (portant respectivement sur une amélioration de la qualité du signal reçu et une détermination d'une distance entre un groupe de piétons et un scanner 20) correspondant à la troisième étape E3 du premier ordinogramme.

Dans la première étape E1, on itère sur un étape de réception, par au moins un scanner de l'ensemble 20, de signaux radio émis par un ensemble d'émetteurs 30. A chaque itération, pendant une durée dT, chaque scanner de l'ensemble 20 recueille des signaux radio émis par un ou plusieurs émetteurs 30. Dans un mode de réalisation, la durée dT peut être égale, par exemple à 200 secondes.

Un signal radio généré par un émetteur 30 peut être reçu par un ou plusieurs scanners pris parmi l'ensemble de scanners 20. Chaque scanner de l'ensemble 20 extrait des informations du signal reçu, notamment,
- l'heure à laquelle le signal est reçu par ledit scanner,
- un identifiant (également nommé adresse MAC) de l'émetteur du signal radio,
- une puissance du signal mesurée par ledit scanner.

Lorsqu'un même signal radio est reçu par plusieurs scanners de l'ensemble 20, l'heure à laquelle le signal est reçu, ainsi que la puissance du signal reçu, sont généralement différentes selon le scanner, puisque les différents scanners de l'ensemble 20 sont répartis en différents points de l'espace.

La première étape E1 comprend avantageusement une étape de suppression de données non pertinentes. En particulier, on supprime les données qui ont trop peu d'échantillons.

Par exemple, lorsqu'un scanner de l'ensemble 20 reçoit une faible quantité de signaux issus d'un même émetteur, ces données ne sont pas prises en compte.

Des valeurs aberrantes peuvent également être supprimées. Différentes solutions peuvent être mises en œuvre pour détecter les valeurs aberrantes, par exemple l'utilisation d'une machine à vecteur de support (SVM).

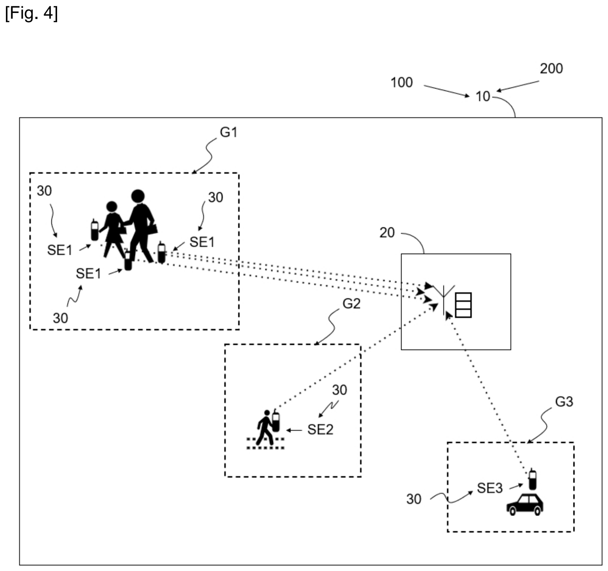

On enchaîne ensuite sur l'étape E2 de regroupement, en sous-groupes, des signaux radio reçus par les scanners de l'ensemble 20. Comme cela est illustré par la figure 4, des sous-groupes G1, G2, G3 de signaux radio sont définis de sorte que les signaux radios de chaque sous-groupe sont émis par un sous-ensemble donné SE1, SE2, SE3 d'émetteurs 30 situés à proximité les uns des autres et se déplaçant de manière coordonnée.

Dans la suite du document, on considère qu'un sous-ensemble d'émetteurs 30 se déplacent de manière coordonnée lorsque :
- les émetteurs du sous-ensemble suivent des trajectoires sensiblement identiques ou sensiblement parallèles et/ou,
- la vitesse de déplacement et l'accélération des émetteurs du sous-ensemble est sensiblement homogène.

Dans un mode de réalisation, les sous-groupes de signaux radio sont déterminés en utilisant une méthode dites des K-moyennes, qui est une méthode de clustering non supervisé. Le principe de la méthode des K-moyennes est de minimiser, pour chaque cluster, une « distance » calculée entre les points du cluster et le centre du cluster. En complément, on peut également utiliser un algorithme dit de « distorsion temporelle dynamique » qui peut également être utilisé pour mesurer la similarité entre deux signaux radio pouvant varier en vitesse ou en durée.

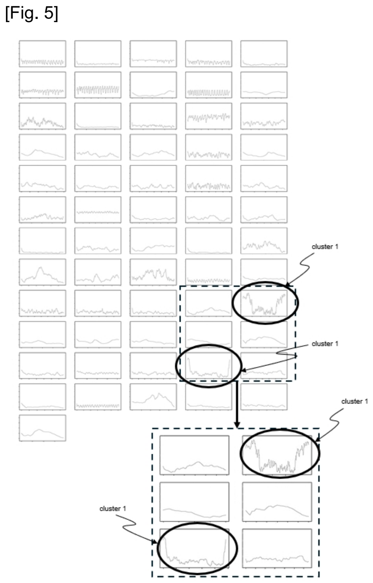

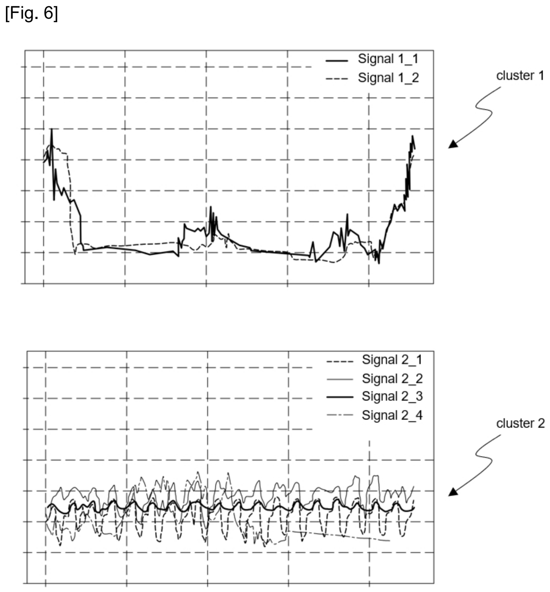

Un exemple de mise en œuvre de l'étape E2 de regroupement est illustré par les figures 5 et 6. La figure 5 comprend 61 courbes représentant respectivement 61 signaux reçus par un scanner de l'ensemble 20 durant un intervalle de temps dT. Chaque courbe représente une évolution temporelle d'une puissance d'un signal donné parmi les 61 signaux reçus. Deux signaux (entourés sur le graphique) sont détectés comme présentant une évolution temporelle similaire.

La figure 6 illustre deux regroupements de signaux, nommés respectivement cluster 1 et 2. Le cluster 1 de la figure 6 illustre le regroupement des signaux identifié dans la figure 5.

Les figures 5 et 6 illustrent une expérience réalisée avec une application de scanner Bluetooth, installée sur un smartphone placé dans un véhicule automobile stationné. Par ailleurs, un piéton portant sur lui deux émetteurs dont les identifiants (c'est-à-dire les adresses MAC) sont connus, se promène dans une zone couverte par la portée du scanner placé dans le véhicule automobile. L'expérience a permis de vérifier que l'étape E2 de regroupement selon l'invention permet bien d'identifier un sous-ensemble d'émetteurs composé des deux émetteurs portés par le piéton. Cette expérience a été réalisée sur une fenêtre de temps dont la durée est 200 secondes.

Après détermination des sous-ensembles d'émetteurs SE1, SE2, SE3 (correspondant respectivement à des sous-groupes de signaux G1, G2, G3), on enchaîne sur une étape E3 de détermination d'une position d'au moins un groupe de piétons en fonction des sous-groupes G1, G2, G3 de signaux radio définis

Pour cela, dans un premier mode de réalisation, on traite les signaux de chaque sous-groupe selon une méthode dite « de combinaison de diversité ». Par exemple, on peut appliquer une technique dite « de sélection de diversité (nommée « Selection Combining »), dans laquelle on sélectionne le signal dont la qualité est la meilleure parmi plusieurs signaux reçus.

Alternativement, dans un deuxième mode de réalisation, on peut traiter les signaux de chaque sous-groupe selon une méthode dite de « combinaison à égalisation maximale » (Maximum Ratio Combining, MRC), dans laquelle les signaux reçus sont combinés de manière pondérée, chaque signal étant multiplié par un coefficient proportionnel à sa qualité.

Les deux méthodes précitées permettent d'améliorer une qualité des signaux radio afin d'améliorer la fiabilité et la précision d'estimation d'une distance entre un groupe de piétons et un scanner 20.

L'estimation d'une distance d, exprimée en mètres, mesurée entre un sous-ensemble donné d'émetteurs et un scanner 20 (récepteur), peut être mise en œuvre par un modèle de propagation log-normal exprimé par la formule suivante : $d = {d}_{0} \times {10}^{\frac{{P}_{t} - {P}_{r} - PL \left({d}_{0}\right) - {X}_{σ}}{10 \times n}}$ où
- d est une distance exprimée en mètres, entre le récepteur et le groupe donné d'émetteurs,
- d0 est une distance dite de référence exprimée en mètres,
- Pt est une puissance d'un signal émis par l'émetteur exprimée en dB,
- Pr est une puissance d'un signal reçu par un récepteur, exprimée en dBm,
- PL(d0) est une perte de chemin à la distance de référence d0 (perte de puissance du signal lorsqu'il atteint la distance d0),
- n est un exposant de perte de chemin, qui quantifie une vitesse à laquelle la puissance du signal diminue en fonction d'une distance entre un émetteur et un récepteur, et
- Xσ est une variable représentant des effets d'ombrage (c'est-à-dire des variations de puissance d'un signal reçu en fonction d'obstacles situés entre l'émetteur et le récepteur), Xσ étant utilisé si l'émetteur se trouve derrière un obstacle, c'est-à-dire si l'appareil n'est pas en visibilité directe (NLOS), sinon (si LOS) Xσ est égal à 0.

Il existe différentes approches permettant de déterminer si un émetteur se trouve derrière un obstacle (l'émetteur est dit « en situation de NLOS ») ou non. Dans l'approche statistique, on analyse l'écart-type ainsi qu'une asymétrie des valeurs de puissance d'un même appareil, car des fluctuations élevées (notamment une variance élevée) et des irrégularités dans la distribution de la puissance du signal sont révélatrices d'une situation dite de « NLOS ». Lorsqu'une situation de NLOS est identifiée, une valeur élevée peut être affectée à la variable Xσ, par exemple une valeur de 10 dB dans des environnements urbains.

Ainsi, dans l'étape E3, pour chaque sous-ensemble donné d'équipements du premier ensemble 30, et en fonction d'une puissance des signaux radio émis par le sous-ensemble donné d'équipements, on a déterminé une distance entre un groupe de piétons transportant le sous-ensemble donné d'équipements et un système d'analyse 20.

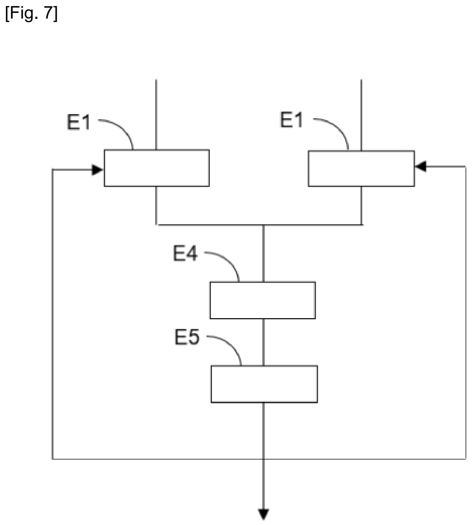

La figure 7 représente un mode d'exécution alternatif du premier procédé de détection et de localisation de piéton, plus particulièrement applicable dans le cas où un sous-ensemble d'émetteurs 30 est détecté par deux scanners 20 distincts.

Dans ce mode de réalisation, l'étape E1 de réception d'un signal, de nettoyage, puis de filtrage des données émises par un émetteur 30 se déroule comme cela a été précédemment décrit en référence à la figure 2.

Puis, à l'issue de l'étape E1, on enchaîne sur une étape E4, dans laquelle
- on applique tout d'abord un premier niveau de regroupement des signaux, effectué séparément pour chacun des scanners 20, comme cela a été précédemment décrit,
- puis à partir des regroupements réalisés au niveau de chaque scanner 20, on effectue un deuxième niveau de regroupement en combinant les signaux reçus par les deux scanners 20, le deuxième niveau de regroupement permettant d'affiner les regroupements de signaux obtenus.

Puis, à partir des clusters de signaux radio ainsi consolidés, on enchaîne sur une étape E5, dans laquelle on calcule, selon la même formule que celle décrite dans l'étape E3, une distance d exprimée en mètres mesurées entre un sous-ensemble donné d'émetteurs et un scanner 20.

Ainsi, le dispositif 10 permet de calculer une distance entre un scanner 20 et un ou plusieurs groupes de piétons se déplaçant à proximité du scanner 20, chaque groupe contenant au moins un piéton.

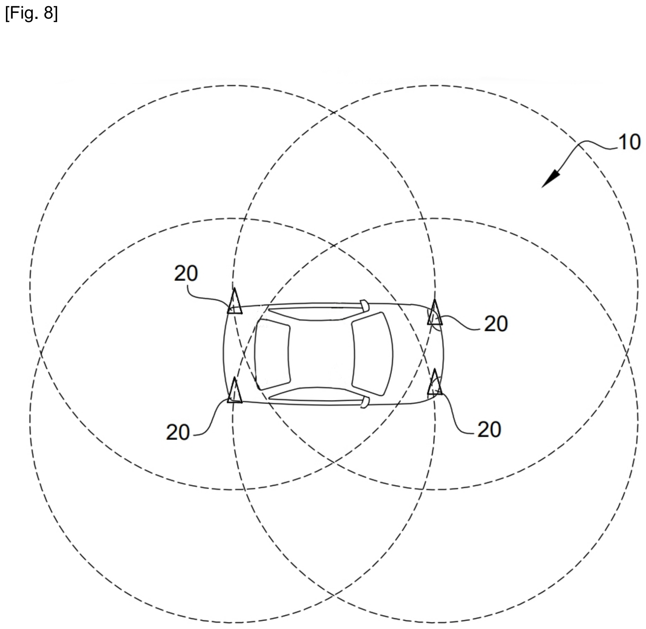

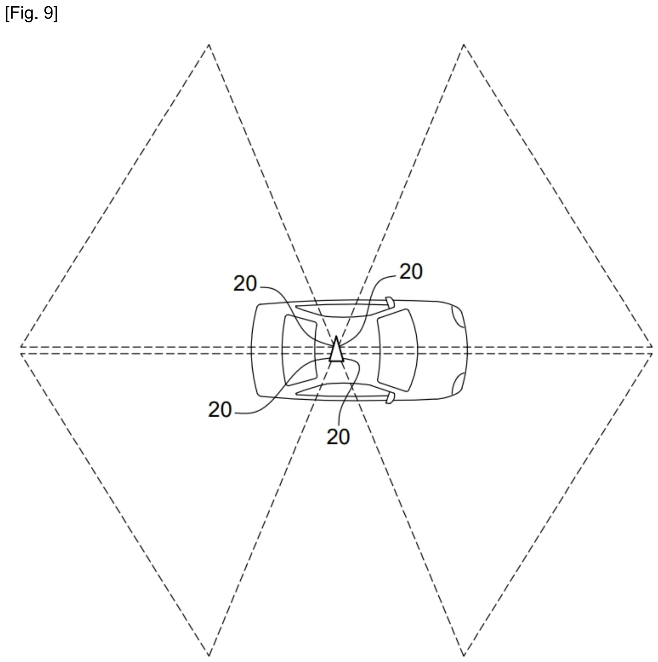

L'invention porte en outre sur un véhicule automobile 100 comprenant un premier dispositif 10 selon l'invention. Avantageusement, le premier dispositif 10 comprend plusieurs scanners 20, par exemple le premier dispositif 10 comprend quatre scanners 20. Dans un mode de réalisation représenté par la figure 8, le véhicule automobile 100 est équipé d'un premier dispositif 10 comprenant quatre scanners 20 omnidirectionnels. Dans un mode de réalisation alternatif représenté par la figure 9, le véhicule automobile 100 est équipé d'un premier dispositif 10 comprenant quatre scanners 20 unidirectionnels.

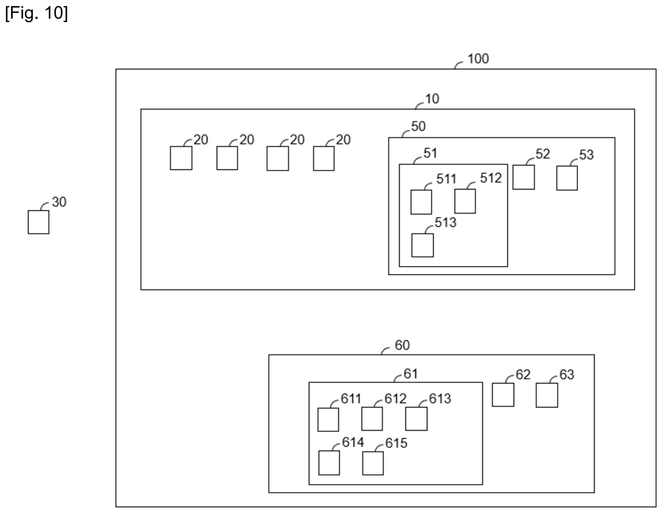

Dans un mode de réalisation illustré par la figure 10, le véhicule automobile 100 comprend une unité de calcul 60 permettant de mettre en œuvre un deuxième procédé, selon l'invention, de détection et de localisation de piétons dans un environnement du véhicule automobile 100. L'unité de calcul 60 comprend un microprocesseur 61, une mémoire électronique locale 62 et des interfaces de communication 63 permettant au microprocesseur 61 de communiquer avec moins un scanner 20, notamment avec une pluralité de scanners 20. Dans un mode de réalisation, le microprocesseur permet d'exécuter un logiciel comprenant les modules suivants, qui collaborent entre eux :
- un module 611 de détection et de localisation de groupes de piétons, par le premier dispositif 10,
- un module 612 de positionnement, dans un repère attaché au véhicule automobile 100, des groupes de piétons détectés par le dispositif 10,
- un module 613 d'estimation d'une vitesse et d'un type de mobilité de chaque groupe de piétons,
- un module 614 d'analyse d'un risque de collision du véhicule automobile 100 avec chaque groupe de piétions, et
- un module 615 d'alerte d'un conducteur ou d'un système de supervision du véhicule automobile 100 d'un risque de collision avec un groupe de piétons.

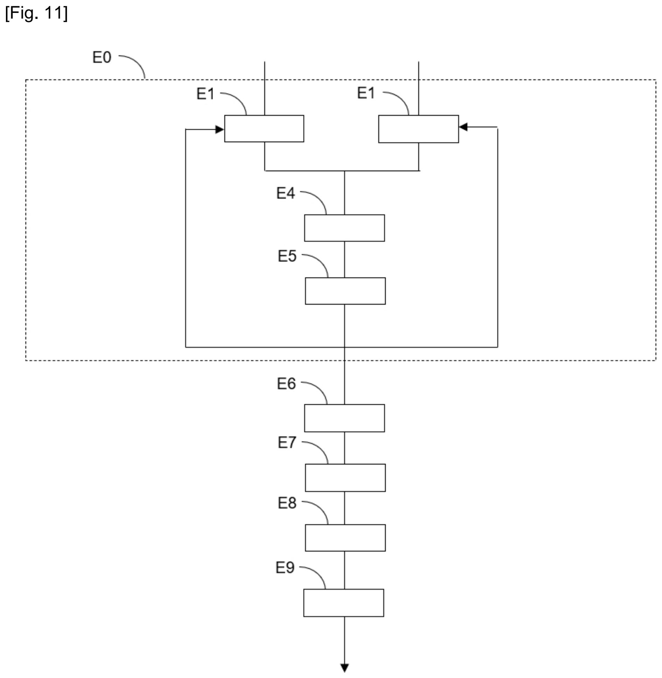

En référence à la figure 11, on décrit les étapes E0, E6, E7, E8, E9 d'un deuxième procédé de détection et de localisation de piétons dans un environnement du véhicule automobile 100. Les étapes E0, E6, E7, E8, E9 sont exécutées successivement.

Dans l'étape E0, le premier dispositif 10 équipant le véhicule automobile 100 permet de détecter et de localiser au moins un groupe de piétons situé dans un environnement du véhicule automobile 100.

Puis on enchaîne sur l'étape E6 dans laquelle on positionne l'au moins un groupe de piétons dans un repère attaché au véhicule automobile 100. Selon une première approche, on peut utiliser plusieurs scanners omnidirectionnels pour localiser le groupe d'appareils à l'aide de la méthode de triangulation illustrée par la figure 8. De plus, la précision et la qualité de la localisation peuvent être améliorées en appliquant une technique d'apprentissage automatique. En complément ou alternativement, on peut utiliser plusieurs scanners 20 directionnels pour positionner l'au moins un groupe de piétons dans les coordonnées locales du véhicule automobile 100.

Avantageusement, la localisation d'un groupe de piétons peut en outre être raffinée en utilisant des données issues d'un système de perception embarquée du véhicule automobile 100.

Puis on enchaîne sur l'étape E7 dans laquelle on estime une vitesse et un type de mobilité de chaque au moins un groupe de piétons.

Le terme « type de mobilité » fait référence à type d'usager susceptible de se trouver à proximité du véhicule automobile, par exemple le type de mobilité comprend un type « piéton », ou encore un type « cycliste » ou une type « véhicule ». Le deuxième procédé selon l'invention prend en compte le type de mobilité des usagers vulnérables pour calculer notamment une durée avant collision, et/ou un risque de collision ainsi qu'un mode d'alerte du conducteur du véhicule automobile 100.

Puis on enchaine sur l'étape E8 dans laquelle, pour chaque au moins un groupe de piétions, on analyse un risque de collision du véhicule automobile 100 avec le groupe de piétons. Notamment, on évalue un risque de conflit potentiel entre une trajectoire du véhicule et l'au moins un groupe de piétons, par exemple en calculant un temps avant collision.

Puis on enchaîne sur l'étape E9 dans laquelle on alerte un conducteur ou un système de supervision du véhicule automobile 100 d'un risque de collision avec l'au moins un groupe de piétons.

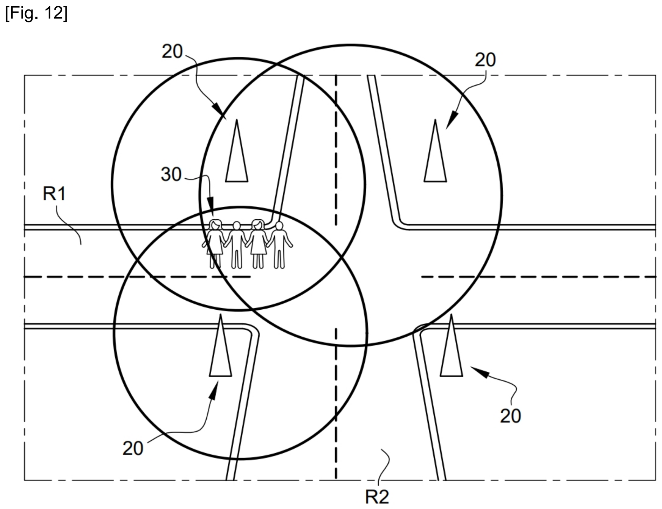

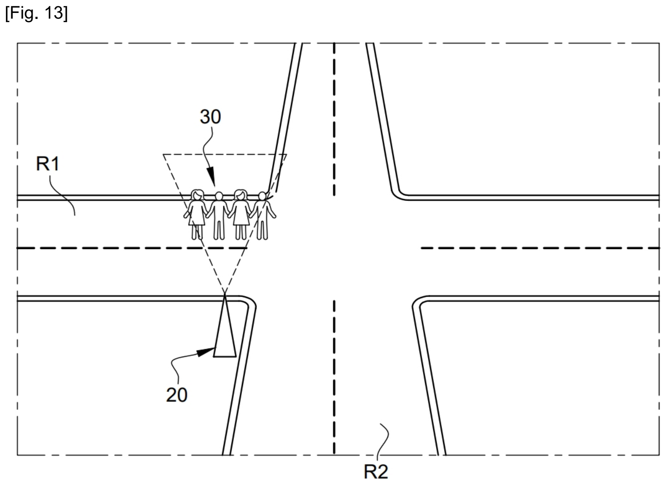

L'invention porte en outre sur un élément d'infrastructure routière 200 comprenant un premier dispositif 10 selon l'invention. Dans un mode de réalisation illustré par les figures 12 et 13, un ou plusieurs scanners 20 sont installés au niveau de feux de circulation régulant le trafic d'une intersection entre une première route R1 et une deuxième route R2.

Différents modes d'implantation des scanners 20 du dispositif 10 sur l'intersection sont envisageables. Selon un premier mode d'installation illustré par la figure 12, on dispose plusieurs scanners omnidirectionnels en différents points de l'intersection, de sorte à pouvoir localiser des groupes de piétons en utilisant une méthode de triangulation. Selon un deuxième mode d'installation illustré par la figure 13, on dispose un scanner directionnel par passage piéton. La précision de la localisation des groupes de piétons peut en outre être améliorée en appliquant une technique d'apprentissage automatique.

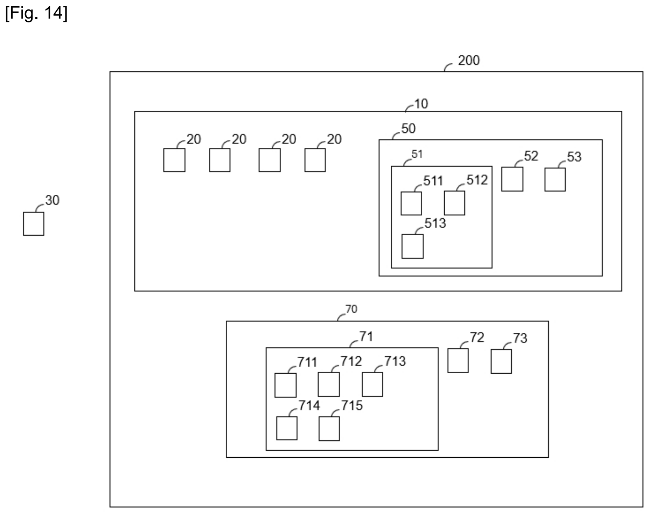

Dans un mode de réalisation illustré par la figure 14, l'élément d'infrastructure routière 200 comprend une unité de calcul 70 permettant de mettre en œuvre un troisième procédé, selon l'invention, de détection et de localisation de piétons dans un environnement de l'élément d'infrastructure routière 200. L'unité de calcul 70 comprend un microprocesseur 71, une mémoire électronique locale 72 et des interfaces de communication 73 permettant au microprocesseur 71 de communiquer avec moins un scanner 20, notamment avec une pluralité de scanners 20. Dans un mode de réalisation, le microprocesseur 71 permet d'exécuter un logiciel comprenant les modules suivants, qui collaborent entre eux :
- un module 711 de détection et de localisation de groupes de piétons, par le premier dispositif 10,
- un module 712 de positionnement, dans un repère attaché à l'élément d'infrastructure routière 200, des groupes piétons détectés par le dispositif 10,
- optionnellement, un module 713 d'estimation d'une vitesse et d'un type de mobilité de chaque groupe de piétons,
- un module 714 de contrôle de l'élément d'infrastructure routière 200 en fonction de données relatives aux groupes de piétons, et
- optionnellement, un module 715 d'alerte d'un conducteur ou d'un système de supervision d'un véhicule automobile dont la trajectoire peut entrer en conflit avec un groupe de piétons traversant une route.

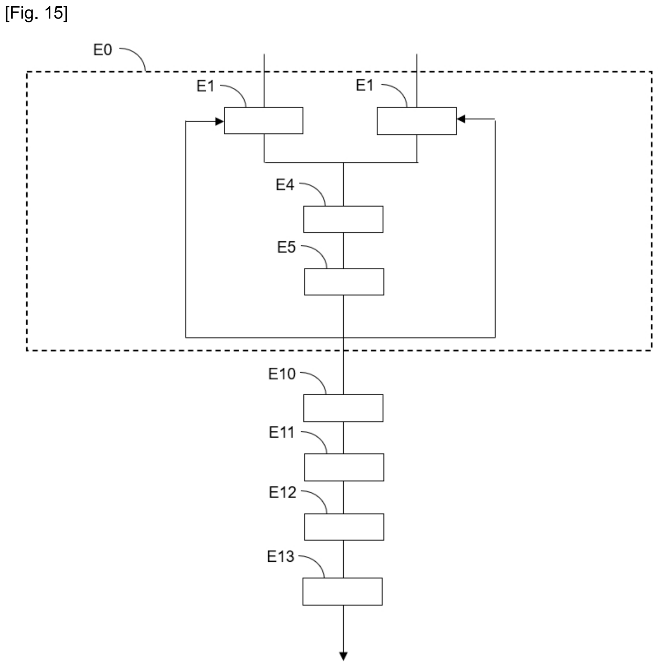

En référence à la figure 15, on décrit les étapes E0, E10, E11, E12, E13 d'un troisième procédé de détection et de localisation de piétons dans un environnement d'un élément d'infrastructure routière 200. Les étapes E0, E10, E11 (optionnelle), E12 et E13 (optionnelle) sont exécutées successivement.

Dans l'étape E0, le premier dispositif 10 équipant l'élément d'infrastructure routière 200 permet de détecter et de localiser au moins un groupe de piétons situé dans un environnement de l'élément d'infrastructure routière 200.

Puis on enchaîne sur l'étape E10 dans laquelle on positionne l'au moins un groupe de piétons dans un repère attaché à l'élément d'infrastructure routière 200, comme cela a été précédemment décrit.

Puis, optionnellement, on enchaîne sur l'étape E11 dans laquelle on estime une vitesse et un type de mobilité de chaque au moins un groupe de piétons.

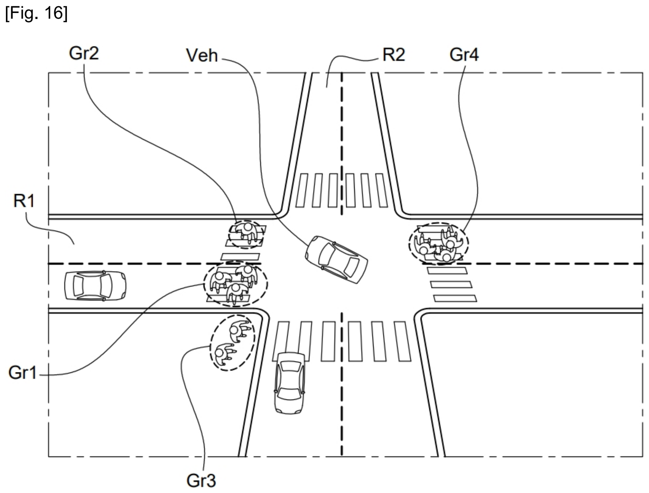

Puis on enchaîne sur l'étape E12 dans laquelle on contrôle l'élément d'infrastructure routière 200 en fonction de données relatives aux groupes de piétons détectés. Notamment, dans un mode de réalisation illustré par la figure 16, on optimise une durée des feux de signalisation d'une intersection en fonction des données relatives aux groupes de piétons circulant autour de l'élément d'infrastructure routière 200.

En effet, la figure 16 illustre une situation où le dispositif 10 équipant l'élément d'infrastructure routière 200 détecte quatre groupes de piétons Gr1, Gr2, Gr3 et Gr4 disposés à une intersection entre deux routes R1, R2. Les véhicules se trouvant sur la première route R1 sont arrêtés au niveau d'un feu de circulation, tandis que les véhicules se trouvant sur la deuxième route R2 peuvent circuler.

Un premier et un deuxième groupes de piétons Gr1, Gr2 traversent un premier passage piéton de la première route R1. Un troisième groupe de piéton Gr3 est arrêté devant un passage piéton de la deuxième route R2, afin de laisser passer les véhicules circulant sur la deuxième route R2.

Avantageusement, l'élément d'infrastructure routière 200 selon l'invention permet d'adapter une durée des feux tricolores de l'intersection en fonction des objectifs suivants :
- la signalétique du premier passage piéton reste verte pour les piétons, au moins jusqu'à la fin du passage du deuxième groupe de piétons Gr2,
- le temps d'attente du groupe Gr3 au passage piéton de la deuxième route R2 ne doit pas être trop long,
- le temps de passage et le temps d'attente des véhicules doit être optimisé.

Puis, optionnellement, on enchaîne sur l'étape E13, dans laquelle l'élément d'infrastructure routière 200 alerte un conducteur ou un système de supervision d'un véhicule automobile d'un risque de collision avec l'au moins un groupe de piétons. Par exemple, dans l'exemple illustré par la figure 16, un véhicule Veh circulant sur la deuxième route R2 change de direction pour s'engager sur la première route R1, alors que deux groupes de piétons Gr1, Gr2 sont en train de traverser la première route R1. L'élément d'infrastructure routière 200 peut alors adresser un message à un conducteur ou à un système de supervision du véhicule Veh pour signaler la situation de danger et ainsi éviter un accident.

Finalement, l'invention porte sur un premier dispositif 10 de détection et de localisation des usagers vulnérables (notamment les piétons et les cyclistes) basé uniquement sur une analyse des signaux radio émis par les appareils mobiles des usagers vulnérables. La plupart des usagers vulnérables étant équipés d'appareils mobiles, ils sont donc détectés par un système mettant en œuvre l'invention. Dans le cas particulier des enfants qui se déplaceraient sans appareil mobile, il est probable qu'ils soient accompagnés par un adulte lui-même équipé d'un appareil mobile.

Grâce au premier dispositif 10 selon l'invention, un regroupement des signaux émis par les appareils mobiles permet à la fois d'interpréter la densité des appareils mobiles dans l'environnement, et d'améliorer les estimations de distance entre un sous-groupe d'émetteurs et un récepteur en combinant les puissances des signaux faisant partie d'un même sous-groupe, ce qui permet de gérer la fluctuation naturelle de la puissance des signaux radio issus des appareils mobiles.

Plus largement, le premier dispositif 10 selon l'invention permet :
- un regroupement intelligent des signaux radio,
- un traitement unifié des appareils électroniques relatifs à un même usager, de même qu'un traitement unifié des appareils électroniques relatifs à plusieurs usagers situés à proximité les uns des autres et se déplaçant de manière coordonnée,
- un fonctionnement ne nécessitant pas de mettre en œuvre des protocoles de communication spécifiques,
- une exploitation de tout type d'appareil mobile émettant des signaux radio (téléphones, montres connectées, lunettes intelligentes).

Contrairement aux systèmes existants, le premier dispositif 10 selon l'invention ne nécessite donc pas d'équiper les véhicules de capteurs embarqués ; en outre l'invention fonctionne sans échange d'information entre véhicules et usagers.

L'invention porte en outre sur un véhicule automobile 100 équipé d'un premier dispositif 10 selon l'invention et/ou d'un deuxième dispositif 60 selon l'invention. Un véhicule équipé de l'invention est ainsi apte à détecter et prendre en compte la présence d'usagers vulnérables dans son environnement. Une mise en œuvre de l'invention dans un véhicule selon l'invention présente en outre les avantages suivants :
- la solution mise en œuvre est économique et peu coûteuse en calcul,
- la détection et la localisation des usagers vulnérables fonctionne quelles que soient les conditions météorologiques, et également lorsque les usagers sont masqués par l'environnement,
- la solution mise en œuvre ne requiert pas d'interopérabilité avec des protocoles de communication,
- la solution mise en œuvre est passive, elle repose uniquement sur la réception de signaux générés par des systèmes extérieurs.

L'invention porte en outre sur un élément d'infrastructure routière 200 équipé d'un premier dispositif 10 selon l'invention et/ou d'un deuxième dispositif 60 selon l'invention. Un élément d'infrastructure routière équipé de l'invention est ainsi apte à détecter et prendre en compte la présence d'usagers vulnérables dans son environnement. Une mise en œuvre de l'invention dans un élément d'infrastructure routière selon l'invention présente en outre les avantages suivants :
- un tel élément d'infrastructure routière permet de contrôler et d'optimiser un fonctionnement des feux de signalisation, notamment pour améliorer les conditions de circulation des usagers vulnérables et la fluidité du trafic routier,
- la mise en œuvre de l'invention est économique, lorsqu'on la compare au coût de mise en œuvre de boucles inductives, de radars et de caméras,
- l'invention peut bénéficier à tous types d'usagers, et particulièrement aux usagers vulnérables,
- l'invention ne se limite pas à la seule détection des véhicules.

Plus généralement, les premier, deuxième et troisième dispositifs 10, 60, 70 selon l'invention permettent en outre
- une estimation d'une densité piétonnière d'une zone,
- une analyse d'un comportement des foules,
- une analyse de trafic, notamment un trafic généré par des usagers vulnérables.

## Revendications

1. Procédé de détection et de localisation de piétons situés dans un environnement d'au moins un système (20) d'analyse de signaux radio, notamment un scanner Bluetooth et/ou wifi, l'au moins un système (20) d'analyse équipant un véhicule automobile (100) ou un élément d'infrastructure routière (200),
le procédé étant **caractérisé en ce qu'**il comprend :
- une première étape (E1) de réception, par l'au moins un système (20) d'analyse, pendant un intervalle de temps donné, de signaux radio émis par un premier ensemble (30) d'équipements émetteurs de signaux radio transportés par les piétons et situés dans une portée de l'au moins un système (20) d'analyse, puis
- une deuxième étape (E2) de répartition, en sous-groupes (G1, G2, G3), des signaux radio reçus par l'au moins un système (20) d'analyse, de sorte que les signaux radio de chaque sous-groupe (G1, G2, G3) sont émis par un sous-ensemble donné d'équipements (SE1, SE2, SE3) du premier ensemble (30), les équipements de chaque sous-ensemble donné d'équipements (SE1, SE2, SE3) étant situés à proximité les uns des autres et se déplaçant de manière coordonnée, puis
- pour chaque sous-ensemble donné d'équipements (SE1, SE2, SE3) du premier ensemble (30), et en fonction d'une puissance des signaux radio émis par le sous-ensemble donné d'équipements, une troisième étape (E3) de détermination d'une distance entre un groupe de piétons transportant le sous-ensemble donné d'équipements (SE1, SE2, SE3) et l'au moins un système (20) d'analyse.

2. Procédé de détection et de localisation de piétons selon la revendication précédente, **caractérisé en ce que**
- l'au moins un système (20) d'analyse de signaux radio comprend au moins N systèmes d'analyse de signaux radio, notamment au moins N scanners radio, N étant supérieur ou égal à 1, et/ou
- l'au moins un système (20) d'analyse de signaux radio comprend plusieurs scanners omnidirectionnels, et/ou l'au moins un système (20) d'analyse de signaux radio comprend un ou plusieurs scanners directionnels.

3. Procédé de détection et de localisation de piétons selon l'une des revendications précédentes, **caractérisé en ce que** la deuxième étape (E2) de répartition des signaux radio reçus en sous-groupes comprend une étape d'analyse en cluster prenant en compte un contenu des signaux radio reçus, notamment une adresse d'un équipement émetteur, et/ou
**en ce que** l'étape d'analyse en cluster comprend une application d'une méthode dite des K-moyennes permettant de minimiser, pour chaque cluster, une distance calculée entre des points du cluster et un centre du cluster, et/ou **en ce que** l'étape d'analyse en cluster comprend un mise en œuvre d'un algorithme dit de « distorsion temporelle dynamique » permettant d'évaluer une similarité entre deux signaux radio pouvant varier en vitesse ou en durée.

4. Procédé de détection et de localisation de piétons selon l'une des revendications précédentes, **caractérisé en ce que** la troisième étape (E3) comprend une sous-étape d'amélioration d'une qualité des signaux radio de chaque sous-groupe, afin d'améliorer une précision d'estimation d'une distance entre un groupe de piétons et un système (20) d'analyse de signaux radio, la sous-étape d'amélioration comprenant :
- une mise en oeuvre d'une première méthode dite « de sélection de diversité », dans laquelle on sélectionne, parmi plusieurs signaux radio reçus, un signal dont la qualité est la meilleure, et/ou
- une mise en œuvre d'une deuxième méthode dite « de combinaison à égalisation maximale », dans laquelle les signaux radio reçus sont combinés de manière pondérée, chaque signal radio étant pondéré par un coefficient proportionnel à une qualité dudit signal.

5. Procédé de détection et de localisation de piétons selon l'une des revendications précédentes, **caractérisé en ce qu'**une distance, exprimée en mètres, mesurée entre un groupe de piétons et un système (20) d'analyse de signaux radio est égale à un produit d'une distance dite de référence (d0) exprimée en mètres, par une puissance donnée (P) du nombre 10, la puissance donnée (P) étant un quotient d'un premier nombre décimal (P1) par un deuxième nombre décimal (P2),
le premier nombre décimal (P1) étant égal à une différence entre
- une puissance (Pt), exprimée en décibels, d'un signal émis par des équipements transportés par le groupe de piétons, et
- une somme des puissances suivantes :
(i) une puissance (Pr) d'un signal reçu par le système (20) d'analyse, exprimée en dBm,
(ii) une puissance (PL(d0)) perdue par le signal lorsqu'il parcourt la distance (d0) de référence,
(iii) une variation (Xσ) de puissance d'un signal reçu, en fonction d'obstacles situés entre le groupe de piétons et le système (20) d'analyse,
et le deuxième nombre décimal (P2) étant égal à un produit par le nombre 10 d'un exposant dit « l'exposant de perte de chemin » qui quantifie une vitesse de diminution de la puissance du signal émis par le groupe de piétons en fonction d'une distance entre le groupe de piétons et le système (20) d'analyse.

6. Dispositif (10) de détection et de localisation de piétons situés dans un environnement d'au moins un système (20) d'analyse de signaux radio, le dispositif (10) comprenant au moins un système (20) d'analyse de systèmes radios, le dispositif (10) comprenant des éléments matériels et/ou logiciels (20, 50, 51, 52, 53, 511, 512, 513) mettant en œuvre le procédé selon l'une des revendications précédentes.

7. Procédé de détection et de localisation de piétons situés dans un environnement de circulation d'un véhicule automobile (100), le véhicule automobile comprenant un dispositif (10) de détection et de localisation de piétons situés dans un environnement d'au moins un système (20) d'analyse de signaux radio selon la revendication précédente, le procédé étant **caractérisé en ce qu'**il comprend :
- une étape (E0) de détection et de localisation de groupes de piétons, par le dispositif (10) de détection et de localisation de piétons dans un environnement d'au moins un système (20) d'analyse de signaux radio,
et, optionnellement,
- une étape (E6) de positionnement, dans un repère attaché au véhicule automobile (100), des groupes piétons détectés par le dispositif (10), et/ou
- une étape (E7) d'estimation d'une vitesse de déplacement de chaque groupe de piétons, et/ou
- une étape (E8) d'analyse d'un risque de collision du véhicule automobile (100) avec chaque groupe de piétions, et/ou
- une étape (E9) d'alerte d'un conducteur ou d'un système de supervision du véhicule automobile (100) d'un risque de collision avec un groupe de piétons.

8. Dispositif (60) de détection et de localisation de piétons situés dans un environnement de circulation d'un véhicule automobile (100), équipé d'un dispositif (10) de détection et de localisation de piétons selon la revendication 6, le dispositif (60) comprenant des éléments matériels et/ou logiciels (61, 62, 63, 611, 612, 613, 614, 615) mettant en œuvre le procédé selon la revendication 7.

9. Véhicule automobile (100) **caractérisé en ce qu'**il comprend un dispositif (10) de détection et de localisation de piétons situés dans un environnement d'au moins un système (20) d'analyse de signaux radio selon la revendication 6 ou un dispositif (60) de détection et de localisation de piétons situés dans un environnement de circulation d'un véhicule automobile selon la revendication 8.

10. Procédé de détection et de localisation de piétons situés dans un environnement d'un élément d'infrastructure routière (200), l'élément d'infrastructure routière (200) comprenant un dispositif (10) selon la revendication 6, le procédé étant **caractérisé en ce qu'**il comprend :
- une étape (E0) de détection et de localisation de groupes de piétons, par le dispositif (10) de détection et de localisation de piétons,
et, optionnellement,
- une étape (E10) de positionnement, dans un repère attaché dans un repère attaché à l'élément d'infrastructure routière (200), des groupes piétons détectés par le dispositif (10), et/ou
- une étape (E11) d'estimation d'une vitesse de déplacement de chaque groupe de piétons, et/ou
- une étape (E12) de contrôle de l'élément d'infrastructure routière (200) en fonction de données relatives aux groupes de piétons, et/ou
- une étape (E13) d'alerte d'un conducteur ou d'un système de supervision d'un véhicule automobile située à proximité de l'élément d'infrastructure routière (200) et dont une trajectoire peut entrer en conflit avec un groupe de piétons.

11. Dispositif (70) de détection et de localisation de piétons situés dans un environnement d'un élément d'infrastructure routière (200), le dispositif (70) étant équipé d'un dispositif (10) de détection et de localisation de piétons selon la revendication 6, le dispositif comprenant des éléments matériels et/ou logiciels (71, 72, 73, 711, 712, 713, 714, 715) mettant en œuvre le procédé selon la revendication 10.
